(19) Europäisches Patentamt

European Patent Office

Office européen des brevets

(11) **EP 1 338 693 B1**

(12) **EUROPÄISCHE PATENTSCHRIFT**

(45) Veröffentlichungstag und Bekanntmachung des Hinweises auf die Patenterteilung:
**16.11.2005 Patentblatt 2005/46**

(51) Int Cl.⁷: **D06F 39/00**, A47L 15/46, G01N 21/53

(21) Anmeldenummer: **02003147.2**

(22) Anmeldetag: **14.02.2002**

(54) **Trübungssensoren mit angepasster Übertragungscharakteristik und Verfahren zum Herstellen derselben**

Turbidity sensor with adapted transmission characteristics and manufacturing method therefor

Capteur de turbidité avec caractéristiques de transmission adaptées et procédé pour fabriquer celui-ci

(84) Benannte Vertragsstaaten:
**DE FR GB IT**

(43) Veröffentlichungstag der Anmeldung:
**27.08.2003 Patentblatt 2003/35**

(60) Teilanmeldung:
**04015976.6 / 1 475 471**

(73) Patentinhaber: **emz-Hanauer GmbH & Co. KGaA**
**92507 Nabburg (DE)**

(72) Erfinder: **Schenkel, Johann**
**92439 Bodenwöhr (DE)**

(74) Vertreter: **Schmidt, Steffen J.**
**Wuesthoff & Wuesthoff,**
**Patent- und Rechtsanwälte,**
**Schweigerstrasse 2**
**81541 München (DE)**

(56) Entgegenhaltungen:
**US-A- 3 449 578        US-A- 4 257 708**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

### Gebiet der Erfindung

Die vorliegende Erfindung betrifft im Allgemeinen Trübungssensoren für Haushaltsgeräte, wie z.B. Spülmaschinen, Waschmascheinen und Trockner. Insbesondere betrifft die vorliegende Erfindung Trübungssensoren, bei denen die Übertragungscharakteristika einzelner Komponenten, wie z.B. eines Senders und eines Empfängers für optische Strahlung, aufeinander abgestimmt sind bzw. werden.

### Hintergrund der Erfindung

Bei Haushaltsgeräten, wie z.B. Waschmaschinen, Spülmaschinen und Trocknern ist es bekannt, Trübungssensoren zu verwenden, um die Trübung oder Verunreinigung von in solchen Haushaltsgeräten verwendeten Medien, wie z.B. Spül- oder Waschwasser bzw. Trocknerluft zu bestimmen. Aus der Trübung oder Verunreinigung von Reinigungswasser kann dann beispielsweise die Verschmutzung des zu reinigenden Gutes oder über Inhaltsstoffe der Trocknerabluft oder Zustand des Trocknerflusensiebs die noch in einem zu trocknenden Gut vorhandene Feuchtigkeit ermittelt werden.

Trübungssensoren bestehen im Allgemeinen aus einem Sender und einem Empfänger für optische Strahlung, die sich durch das verwendete Medium ausbreitet. Wechselwirkungen der Strahlung auf ihrem Ausbreitungsweg durch das Medium werden verwendet, um auf die Trübung oder Verunreinigung des Mediums zu schließen.

Die Trübungssensoren weisen ein Gehäuse auf, das in einem Haushaltsgerät so angeordnet ist, dass sich zumindest die Bereiche des Gehäuses, die den Sender und Empfänger aufweisen, in das Innere des Gerätes erstrecken, um die Strahlung durch das sich beim Betrieb des Gerätes in dessen Innerem befindliche Medium zu richten.

Die Übertragungscharakteristik solcher Trübungssensoren ist für deren Betrieb wesentlich, da sie die Genauigkeit und Zuverlässigkeit einer Trübungs- oder Verunreinigungserfassung bestimmt. Für eine unbedämpfte Übertragungsstrecke zwischen einem Sender und einem Empfänger eines Trübungssensors ergibt sich der von dem Empfänger erzeugte Empfängerstrom aus einer Multiplikation des zur Erzeugung der Strahlung dem Sender zugeführten Stroms mit einer Konstante, die neben den im Folgenden genannten Größen auch von den Bereichen des Sensorgehäuses und dem Medium beeinflusst wird, durch die sich der Messstrahl ausbreitet.

Die Konstante hängt senderseitig vom Wirkungsgrad des Senders ab, beispielsweise dem Wirkungsgrad einer Senderdiode für optische Strahlung bzw. der Güte eines damit verwendeten Senderchips.

Entsprechend wird die Konstante empfängerseitig vom Wirkungsgrad des Empfängers beeinflußt, beispielsweise von der Güte eines verwendeten Empfängerchips.

Um die Übertragungscharakteristik von Trübungssensoren zu optimieren, d.h. für eine vorgegebene Spannung oder einen vorgegebenen Strom zum Betrieb des Senders empfängerseitig eine möglichst hohe Ausgangsspannung oder einen möglichst hohen Ausgangsstrom zu erhalten, werden üblicherweise selektierte Bauelemente zum Aufbau des Senders und Empfängers verwendet. Hierfür ist es bekannt, Sender und Empfänger bzw. deren Komponenten vor einem Aufbau eines Trübungssensors hinsichtlich ihrer Sende- bzw. Empfangscharakteristika zu vermessen und dann entsprechend zu gruppieren, d.h. zueinander passende Sender und Empfänger paarweise in den Trübungssensoren zu verwenden. Diese Vorgehensweise ist aufgrund der erforderlichen Überprüfung der Sender und Empfänger zeitaufwendig und kostenintensiv und führt dazu, dass im Allgemeinen nur bestimmte Gruppen von Sender- und Empfängerpaaren verwendet werden können. Alternativ ist es bekannt, den Sender eines Trübungssensors mit einer über einen großen Bereich einstellbaren Leistung zu versorgen, um ausgangsseitig Signale gewünschter oder erforderlicher Größe und Qualität zu erhalten. Dies erfordert eine senderseitige Leistungseinstellung beim Aufbau eines Trübungssensors in Abhängigkeit ausgangsseitiger Signale. Zur Leistungseinstellung benötigte Komponenten sind in dem Trübungssensor angeordnet, werden aber lediglich beim Aufbau des Trübungssensors, aber nicht bei dessen Betrieb benötigt. Dieser Ansatz hat neben der erforderlichen Leistungsanpassung bei der Leistungsversorgung des Senders den Nachteil, dass solche Trübungssensoren Komponenten aufweisen, die für deren eigentlichen Betrieb nicht erforderlich sind. Alternativ werden für eine solche Leistungseinstellung benötigte Komponenten in einer zur Steuerung des Sensors verwendeten Einrichtungen angeordnet. In beiden Fällen wird der Sensor im Allgemeinen nur an einem Arbeitspunkt betrieben, weshalb die zur Leistungseinstellung verwendeten Komponenten beim eigentlichen Betrieb nicht benötigt werden.

Derartige Maßnahmen werden in zunehmendem Maße erforderlich, da die bei Trübungssensoren verwendeten Komponenten, insbesondere Sender und Empfänger, mit immer höheren Wirkungsgraden bzw. Empfindlichkeiten (Güte) gefertigt werden. Dies macht es wiederum in zunehmenden Maß schwieriger, Sender-Empfänger-Paarungen zu erreichen, die für einen Betrieb eines Haushaltsgeräts vorgegebene Kennwerte aufweisen. Mit anderen Worten, die einzelnen Komponenten zum Aufbau eines Trübungssensors werden immer besser, weshalb Trübungssensoren schlechtere Messcharakteristika aufweisen, wenn die zum Aufbau ausgewählten Sender-Empfänger-Paarungen nicht optimal aufeinander abgestimmt sind.

US-4,257,708 und US-3,449,578 offenbaren Verfahren, bei denen die Verfahrensschritte gemäß dem Oberbegriff des Anspruchs 1 verwendet werden.

**Aufgabe der Erfindung**

Aufgabe der vorliegenden Erfindung ist es im Allgemeinen die oben genannten Probleme des Standes der Technik zu beseitigen. Insbesondere soll die vorliegende Erfindung ein Verfahren zur Herstellung von Trübungssensoren bereitstellen, das es ermöglicht, einerseits bei Verwendung sehr hochwertiger Sender und Empfänger deren höhere Absolutwerte auf einfache Weise zu kompensieren und andererseits den Einsatz ungenauerer oder schlecht aufeinander abgestimmt ausgewählte ("unpassende") Sender und Empfänger zu ermöglichen. Des weiteren soll die vorliegende Erfindung Trübungssensoren mit Übertragungscharakteristika bereitstellen, die die Streuung hochwertiger Sender und Empfänger kompensieren bzw. die aus einer Kombination ungenauer Sender und ungenauer Empfänger resultierenden Effekte kompensieren.

**Kurzbeschreibung der Erfindung**

Zur Lösung der genannten Aufgabe stellt die vorliegende Erfindung ein Verfahen zum Einstellen von Ausgangsspannungen eines Trübungssensors und einen entsprechend aufgebauten Trübungssensor bereit.

Insbesondere stellt die vorliegende Erfindung ein Verfahren zum Einstellen (z.B. Verschieben und/oder Einengen) von Ausgangsspannungen eines Trübungssensors bereit, der zur Erfassung der Trübung eines Mediums mittels einer von einem Sender ausgestrahlten und von einem Empfänger empfangenen, sich wenigstens teilweise durch das Medium ausbreitenden Strahlung dient. Zur Charakterisierung gewünschter Ausgangsspannungen des Empfängers in Antwort auf von dem Sender empfangener Strahlung von zum Betrieb des Senders verwendeten Senderströmen wird eine gewünschte Kennlinie oder ein gewünschter Kennlinienbereich definiert. Anhand der realen Komponenten des Trübungssensors und insbesondere des Senders und des Empfängers wird eine aktuelle Kennlinie ermittelt, die die tatsächliche Abhängigkeit der Ausgangsspannungen des Empfängers von den Senderströmen angibt. Basierend auf einem Vergleich der aktuellen Kennlinie mit der gewünschten Kennlinie oder mit dem gewünschten Kennlinienbereich wird ermittelt, ob die Ausgangsspannungen des Empfängers den gewünschten Ausgangsspannungen entsprechen. Ist dies nicht der Fall, wird die ausgangsseitige ohmsche Belastung des Empfängers bestimmt, so dass die gewünschten Ausgangsspannungen erreicht werden. Erfindungsgemäß wird diesereicht, indem ein Belastungs widerstand frischen Empfänger auf die bestimmte ohmsche Belastung festgelegt wird.

Vorzugsweise wird hierbei ein baueinheitlich integrierter Widerstand des Trübungssensors eingestellt, d.h. in seiner Größe so verändert, dass die gewünschten Ausgangsspannungen erreicht werden. Dabei ist es vorgesehen, Potentiometer oder lasergetrimmte Widerstände zu verwenden. Des weiteren können zum Einstellen der ausgangsseitigen ohmschen Belastung des Empfängers die Übertragungscharakteristik für die Strahlung (z.B. wellenlängenabhängig) ermittelt und in Abhängigkeit davon Widerstandsgrößen bestimmt werden, die zu den gewünschten Ausgangsspannungen führen. Vorzugsweise werden diese Messungen bei einem vorgegebenen oder bekannten Zustand des Mediums durchgeführt, beispielsweise bei ungetrübtem Medium oder bei einem Medium mit einer bekannten Verunreinigung.

Ferner stellt die vorliegende Erfindung einen Trübungssensor gemäß Ansprüch 5 mit einer gemäß dem zuvor genannten Verfahren eingestellten ausgangsseitigen ohmschen Belastungen bereit.

**Kurzbeschreibung der Figuren**

In der folgenden Beschreibung bevorzugter Ausführungsformen wird auf die beigefügten Figuren Bezug genommen, von denen zeigen:

Fig. 1 eine schematische Darstellung eines Trübungssensors mit einem Sender und einem Empfänger,

Fig. 2 eine schematische Darstellung des Einflusses von Belastungswiderständen für den Empfänger auf Ausgangsspannungen des Trübungssensors von Fig. 1 in Abhängigkeit von Senderströmen für den Sender von Fig. 1,

Fig. 3 Kennlinien für den Trübungssensor von Fig. 1 gemäß einer ersten ausgangsseitigen ohmschen Belastung,

Fig. 4 Kennlinien für den Trübungssensor von Fig. 1 gemäß einer zweiten ausgangsseitigen ohmschen Belastung, und

Fig. 5 Kennlinien für den Trübungssensor von Fig. 1 mit angepaßten ausgangsseitigen ohmschen Belastungen.

**Beschreibung bevorzugter Ausführungsformen**

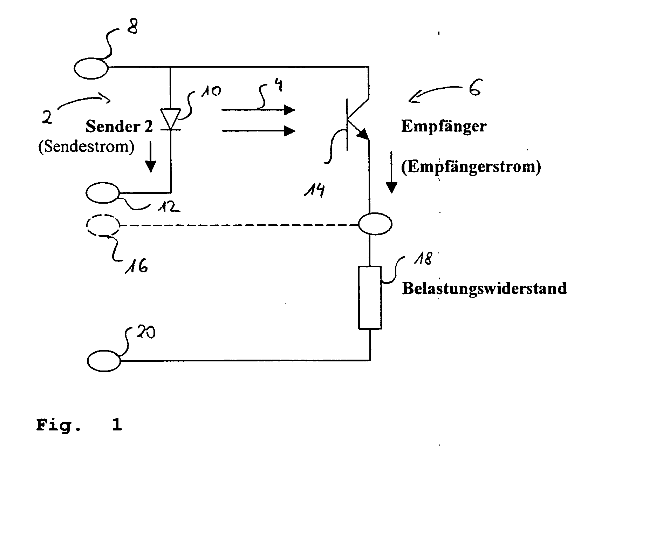

Wie in Fig. 1 schematisch dargestellt, umfasst ein Trübungssensor (nicht bezeichnet) einen Sender 2, der einen optischen Strahl 4 aussendet. Der optische Strahl 4 wird von einem Empfänger 6 empfangen, der in Abhängigkeit von der erhaltenen Bestrahlungsintensität einen Empfängerstrom erzeugt. Im Verhältnis der von dem Sender 2 ausgegebenen Strahlungsintensität zu der von dem Empfänger 6 empfangenen Strahlungsintensität werden Wechselwirkungen des Strahls 4 auf seinem Ausbreitungsweg von dem Sender 2 zu dem Empfänger 6, beispielsweise durch ein Reinigungs- oder Trocknungsmediums eines Haushaltsgeräts, ermittelt, um die Trübung oder Verunreinigung des Mediums zu bestimmen.

Der Sender 2 umfasst eine mit einem Potential 8 verbundene Senderdiode 10, die ausgangsseitig mit einem Senderpotential 12 verbunden ist. Die Potentialdifferenz zwischen dem Potential 8 und dem Senderpotential 12 sowie die Eigenschaften der Senderdiode 10 bestimmen den Senderstrom und damit die von der Senderdiode 10 erzeugte Strahlung 4. Der Empfänger 6 weist einen Empfängertransistor 14 auf, der ebenfalls mit dem Potential 8 verbunden ist. Soweit entspricht die Schaltungsanordnung herkömmlichen Schaltungsanordnungen von Sendern und Empfängern von Trübungssensoren.

Herkömmlicherweise ist der Empfängertransistor 14 ausgangsseitig mit einem Empfängerpotential 16 verbunden, das, wie das Senderpotential 12, durch eine Steuerelektronik (nicht dargestellt) definiert ist. D. h., die Senderdiode 10 und der Empfängertransistor 14 sind jeweils mit entsprechenden Anschlüssen einer Steuerelektronik verbunden. Diese Anordnung ist in Fig. 1 durch die gestrichelten Linien angedeutet.

Dem gegenüber wird bei der vorliegenden Erfindung der Empfänger 6, genauer dessen Empfängertransistor 14, ausgangsseitig mit einem, vorteilhafterweise baueinheitlich integrierten, Belastungswiderstand 18 verbunden, der wiederum mit einem Empfängerpotential 20 verbunden ist.

Üblicherweise ist das Potential 8 mit einer positiven Versorgungsspannung verbunden, wohingegen das Senderpotential 12 und des Empfängerpotential 16 mit der Steuerung und das Potential 20 jeweils mit einem Bezugspotential von 0 Volt verbunden sind. Die Potentiale 12 und 16 sind Eingänge bzw. Ansteuerleitungen und das Potential 20 dient für eine zum Betrieb des Trübungssensors verwendete Steuerung als Bezugspotential, wobei ein Versorgungspotential der Steuerung als Masse für den Trübungssensor verwendet wird.

Die von der Senderdiode 10 erzeugte Strahlungsleistung ist direkt proportional zu dem durch die Senderdiode 10 fließenden Senderstrom, so lange die Senderdiode 10 im linearen Bereich betrieben wird. Dieses proportionale Verhältnis ist nicht gegeben, wenn die Senderdiode 10 außerhalb ihres linearen Bereichs betrieben wird, d.h. der Senderstrom klein ist. Dem entsprechend ist zum Betrieb der Senderdiode 10 ein Senderstrom zu verwenden, der einen Betrieb der Senderdiode 10 in ihrem linearen Bereich gewährleistet.

Dies gilt in vergleichbarer Weise für den von dem Empfängertransistor 14 erzeugten Empfängerstrom. Deshalb sollte die von dem Empfänger 6 erhaltene Strahlungsintensität des Strahls 4 so groß sein, dass der Empfängertransistor 14 in seinem linearen Bereich betrieben wird, um eine Proportionalität zwischen der empfangenen Strahlungsintensität und dem erzeugten Empfängerstrom zu erreichen.

Da die relativen Transmissionsverluste des Strahls 4 auf seinem Ausbreitungsweg von dem Sender 2 zu dem Empfänger 6 über das Gehäuse (nicht dargestellt) des Trübungssensors unabhängig von der übertragenen Strahlungsleistung sind, gilt für das Verhältnis des Empfängerstroms zu dem Senderstrom folgende Gleichung:

$$I_e = K \times I_s,$$

wobei $I_e$ den Empfängerstrom, K die eingangs genannte Übertragungskonstante und $I_s$ den Senderstrom bezeichnen.

Dem entsprechend gilt für eine im Wesentlichen über dem Belastungswiderstand 18 abfallende, empfängerseitige Ausgangsspannung zwischen dem Potential 20 und dem Empfängerpotential 16 folgendes:

$$U_e = I_e \times R = R \times K \times I_s,$$

wobei $U_e$ die ausgangsseitige Empfängerspannung und R die Größe des Belastungswiderstandes 18 angeben.

Damit kann das Verhältnis der Empfängerspannung $U_e$ zu dem Senderstrom $I_s$ wie folgt definiert werden:

$$U_e \div Is = K \times R.$$

Um unabhängig von der im Wesentlichen durch den Sender 2 und dem Empfänger 6 bestimmten Übertragungscharakteristik ein gewünschtes Verhältnis der Empfängerspannung $U_e$ und des Senderstroms $I_s$ zu erhalten, wird in Abhängigkeit von der tatsächlichen Übertragungscharakteristik die Größe R des Belastungswiderstandes 18 variiert. So können höhere Übertragungskonstanten K durch niedrigerere Belastungswiderstände R kompensiert werden und umgekehrt.

Werden beispielsweise ein Sender mit schlechtem Wirkungsgrad und ein unempfindlicher Empfänger verwendet, so ergibt sich für einen vorgegebenen Senderstrom ein relativ dazu kleiner Ausgangsstrom. Im Gegensatz dazu wird bei gleichem Senderstrom ein relativ dazu hoher Ausgangsstrom erzeugt, wenn ein Sender mit hohem Wirkungsgrad und ein empfindlicher Empfänger eingesetzt werden. Um für diese Sender- und Empfängerpaarungen im Wesentlichen gleiche Übertragungscharakteristika zu erreichen, wird im ersten Fall ein hochohmiger Belastungswiderstand 18 oder gar kein Belastungswiderstand 18 verwendet, wohingegen im zweiten Fall ein niederohmiger Belastungswiderstand 18 verwendet wird. Auf diese Weise werden trotz unterschiedlicher Sender und Empfänger, genauer nicht optimal aufeinander abgestimmter Sender und Empfänger, für alle Sender- und Empfängerpaarungen im Wesentlichen gleiche Ausgangsspannungen erzeugt.

Der Belastungswiderstand 18 wird in Abhängigkeit von der Breite und/oder der Lage des Toleranzbereichs eingestellt, der sich durch die jeweilige Kombination der optischen Einzelelemente, d.h. insbesondere des Senders 2 und des Empfängers 6 sowie des Gehäuses ergibt. Der im Sensorgehäuse selbst und insbesondere bei dem Empfänger 6, beispielsweise auf einer Platine, angeordnete Belastungswiderstand 18 kann auf verschiedene Arten eingestellt werden. Außerdem ist es vorgesehen, einzelne oder mehrere Abgleichwiderstände einzusetzen, beispielsweise zu verlöten, um einen schon vorhandenen Belastungswiderstand (z.B. Widerstände von angeschlossenen Komponenten, Leitungen, etc.) anzupassen. Ferner können lasergetrimmte Widerstände verwendet und/oder als Potentiometer ausgeführte Widerstände verwendet werden. Der Einsatz von beispielsweise als digitale Potentiometer ausgeführten Widerstände ist insbesondere bei Anwendungen eines Trübungs- oder Verunreinigungssensors vorteilhaft, mit denen sehr genaue Messungen durchgeführt werden sollen und somit sehr genaue Übertragungsfunktionen erforderlich sind. Des weiteren kann die Anpassung des Belastungswiderstandes 18 durch Zerstören von bestückten Bauteilen (schon mit dem Empfänger 6 verbundene Widerstände) oder Auftrennen von Leiterbahnen und/oder Freibrennen bzw. - schalten von Widerständen erfolgen.

Bei den derzeit verfügbaren, üblicherweise in Selektionsgruppen bezogenen, Komponenten für Trübungssensoren ergeben sich Toleranzbereiche mit einer Schwankungsbreite von etwa +/-60%. Somit können sich für nicht angepaßte Sender- und Empfängerpaarungen für eine gewünschte Ausgangsspannung von 1 Volt tatsächliche Ausgangsspannungen mit Werten zwischen 0,4 und 1,6 Volt ergeben. Mit der im Folgenden erläuterten Anpassung bzw. Einstellung des Belastungswiderstandes 18 können diese Schwankungen je nach Genauigkeit der Durchführung des Anpassungsvorgangs beispielsweise um den Faktor 10 verringert werden.

Im Folgenden wird die Anpassung des Belastungswiderstandes 18 der Einfachheit halber hinsichtlich des Senders 2 und des Empfängers 6 beschrieben. Diese Anpassung ist aber auch hinsichtlich einzelner oder mehrerer weiterer Komponenten eines Trübungssensors anwendbar.

Bei Verwendung von Sendern und Empfängern, deren die Übertragungseigenschaft für den Strahl 4 bestimmenden technischen Größen nicht bekannt sind, werden der Sender 2 und der Empfänger 6 vermessen, um einen Widerstand R für den Belastungswiderstand 18 zu bestimmen, der für die gewünschte Ausgangsspannung $U_e$ sorgt.

Aufgrund verbesserter Herstellungsverfahren werden die bei Trübungssensoren verwendbaren Sender und Empfänger immer hochwertiger, d.h. die Absolutwerte der optischen Kenngrößen liegen immer höher. Erschwerend kommt hinzu, dass die höherwertigen Komponenten aber weiterhin nährungsweise die prozentuale Streubreite aufweisen wie vorherige, schlechtere Komponenten. Dem entsprechend liefern die höherwertigen Komponenten höhere Absolutwerte, weisen in ihren Toleranzbereichen aber mit schlechteren Komponenten vergleichbare prozentuale Schwankungen auf. Wie oben ausgeführt, kann dies dazu führen, dass der Empfänger 6 einen hohen Ausgangsstrom $I_e$ liefert. Um zu vermeiden, dass die Ausgangsspannung $U_e$ einen gewünschten Wert überschreitet, werden in diesen Fällen im Allgemeinen kleine Widerstände R für den Belastungswiderstand 18 verwendet. Bei derartig genau gefertigten Sendern und Empfängern, d.h. Sendern mit besonders hohem Wirkungsgrad und besonders empfindlichen Empfängern, dient der Belastungswiderstand 18 zum Einen dazu, den Sender 2 und den Empfänger 6 aufeinander anzupassen, und zum Andern dazu, die besseren technischen Eigenschaften dieser Komponenten "zu kompensieren". Auf diese Weise wird durch eine in Abhängigkeit des Senders 2 und des Empfängers 6 durchgeführte Anpassung des Belastungswiderstandes 18 eine gewünschte Übertragungscharakteristik erreicht.

Ein weiterer Vorteil des Belastungswiderstandes 18 besteht darin, dass Übertragungscharakteristika erreicht werden können, die mit verfügbaren Sender- und Empfängerpaarungen sonst nicht erreichbar wären. Dies gilt beispielsweise für den Fall, dass die Empfangscharakteristik eines zur Verwendung bei einem Trübungssensor vorgesehenen Empfängers die Verwendung eines gewünschten Senders verhindert. Durch eine entsprechende Wahl der Größe des Belastungswiderstandes 18 kann der vorgesehene Empfänger und der gewünschte Sender in einem Trübungssensor verwendet werden, obwohl diese eigentlich nicht "zueinander passen".

Des weiteren ermöglicht es der Belastungswiderstand 18, nicht verfügbare Leistungs- bzw. Empfindlichkeits-Selektionsgruppen von Sender- und Empfängerpaarungen zu realisieren, indem der Belastungswiderstand 18 entsprechend eingestellt wird.

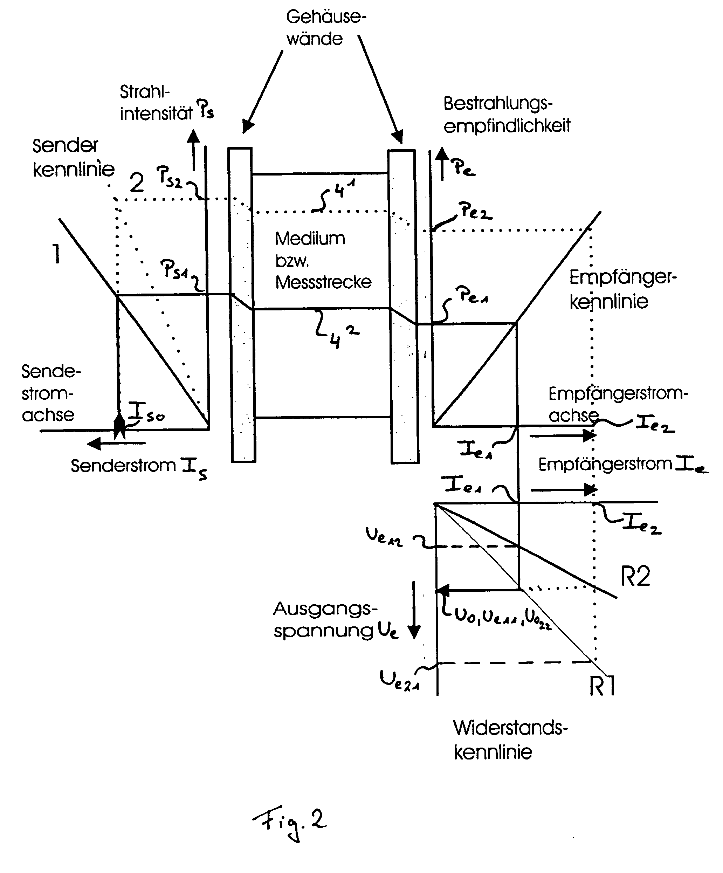

Fig. 2 veranschaulicht den Einfluß des Belastungswiderstandes 18 auf den Toleranzbereich eines Trübungssensor, wobei im Folgenden der Einfluß des Belastungswiderstandes 18 auch als Toleranzänderung bzw. -verschiebung bezeichnet wird. In Fig. 2 ist links die Strahlintensität $P_s$ des Senders 2 in Abhängigkeit des Senderstroms $I_s$ dargestellt, wobei Senderkennlinien 1 und 2 Sender unterschiedlicher Güte angeben (Senderkennlinie 1: schlechter Sender; Senderkennlinie 2: guter Sender).

Ferner ist in Fig. 2 rechts der Empfängerstrom $I_e$ des Empfängers 6 in Abhängigkeit der empfangenen Strahlintensität (Bestrahlungsintensität) $P_e$ für einen

Empfänger einer Güte gezeigt.

Außerdem sind Gehäusewände 22 und 24 des Trübungssensorgehäuses und ein Bereich eines zu vermessenden Mediums 26 veranschaulicht, durch den sich die Strahlung 4 ausbreitet.

Für einen vorgegebenen Senderstrom $I_{s0}$ ergibt sich für den schlechten Sender mit der Senderkennlinie 1 eine Strahlintensität von $P_{s1}$, während sich für den guten Sender mit der Senderkennlinie 2 eine Strahlintensität von $P_{s2}$ ergibt. Daraus ergeben sich Strahlungen $4^1$ und $4^2$, wobei der parallele Verlauf dieser Strahlungen angibt, dass sie den gleichen Wechselwirkungen auf ihren Ausbreitungswegen von dem Sender 2 zu dem Empfänger 6 unterworfen sind.

Der Empfänger 6 erhält Strahlungen mit einer Bestrahlungsempfindlichkeit $P_{e1}$ für den schlechten Sender und eine Bestrahlungsempfindlichkeit $P_{e2}$ für den guten Sender. Aufgrund der Empfängerkennlinie ergibt sich ein Empfängerstrom $I_{e1}$ in Antwort auf die von dem schlechten Sender empfangene Strahlung, während aus der von dem guten Sender herrührenden Strahlung ein Empfängerstrom $I_{e2}$ resultiert.

Die sich in Abhängigkeit des Empfängerstroms $I_e$ ergebende Ausgangsspannung $U_e$ ist in Fig. 2 rechts unten für einen Belastungswiderstand 18 mit dem Widerstandswert R2 und einen Belastungswiderstand 18 mit dem hochohmigeren Widerstandswert R1 dargestellt. Für den Widerstandswert R2 ergibt sich für den Empfängerstrom $I_{e1}$ eine Ausgangsspannung $U_{e12}$, während der Empfängerstrom $I_{e2}$ eine Ausgangsspannung $U_{e22}$ bewirkt. Für den Widerstandswert R1 ergeben sich für die Empfängerströme $I_{e1}$ und $I_{e2}$ Ausgangsspannungen $U_{e11}$ bzw. $U_{e21}$.

Um unabhängig von der Qualität des Senders eine gleiche Ausgangsspannung $U_e$ zu erhalten, wird dem entsprechend für den schlechten Sender (Senderkennlinie 1) bzw. den daraus resultierenden Empfängerstrom $I_{e1}$ der Widerstandswert R1 für den Belastungswiderstand 18 gewählt. Im Fall des guten Senders (Senderkennlinie 2) bzw. des Empfängerstroms $I_{e2}$ wird der Widerstandswert R2 für den Belastungswiderstand 18 eingestellt, um in beiden Fällen die gleichen Ausgangsspannungen zu erreichen, nämlich $U_{e11}$ und $U_{e22}$.

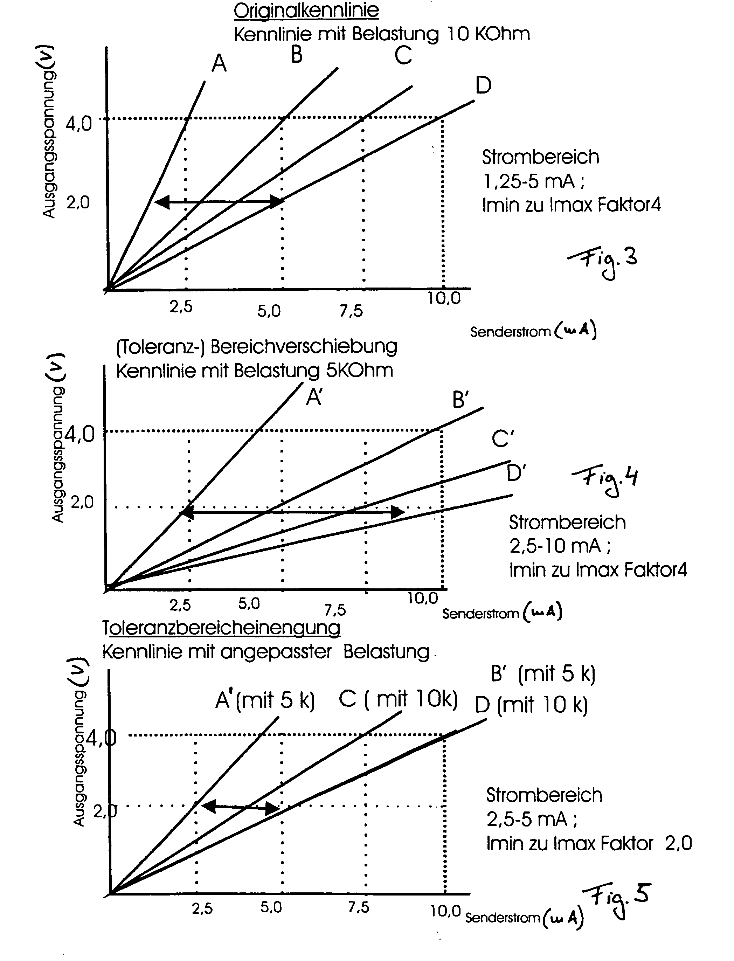

Unter Bezugnahme auf Fig. 3, 4 und 5 wird anhand weiterer Kennlinien für Trübungssensoren die Toleranzänderung bzw. -verschiebung mittels des Belastungswiderstandes 18 veranschaulicht.

In Fig. 3 sind für vier Kennlinien, A, B, C und D die Ausgangsspannung $U_e$ in Abhängigkeit des Senderstroms $I_s$ dargestellt. Hierbei stellt die Kennlinie A eine gute Sender-Empfänger-Paarung dar, während die Kennlinien B, C und D zunehmend schlechtere Sender-Empfänger-Paarungen zeigen. Hierbei wird angenommen, dass der Belastungswiderstand 18 einen Wert von 10 kOhm hat.

Demgegenüber zeigt Fig. 4 eine Toleranzänderung bzw. -verschiebung bei Verwendung eines Belastungswiderstandes 18 mit einem Wert von 5 kOhm, wobei hier ein Kennlinie A' eine gute und die Kennlinien B', C' und D' zunehmend schlechtere Sender-Empfänger-Paarungen angeben.

Ausgehend von den in Fig. 3 und 4 dargestellten Verhältnissen zwischen Senderströmen Is und Ausgangsspannungen Ue kann für die Sender-Empfänger-Paarungen, die in Abhängigkeit des Belastungswiderstandes 18 die Kennlinien B/B' und D/D' aufweisen, im Wesentlichen gleiche Kennlinien erreicht werden, wenn für die gute Sender-Empfänger-Paarung (Kennlinie B/B') der Belastungswiderstand 18 einen Wert von 5 kOhm und für die schlechtere Sender-Empfänger-Paarung (Kennlinie D/D') einen Wert von 10 kOhm hat.

Des Weiteren kann durch eine geeignete Wahl von Belastungswiderständen 18 eine Einengung des Bereichs der Ausgangsspannungen des Empfängers 6 erreicht werden, in dem Kennlinien für Sender-Empfänger-Paarungen verschoben werden. So kann beispielsweise der Bereich, in dem die Ausgangsspannung des Empfängers 6 liegt, für die Sender-Empfänger-Paarungen mit den Kennlinien A/A' und C/C' begrenzt werden, wenn für die Sender-Empfänger-Paarung mit den Kennlinien A/A' der Belastungswiderstand 18 einen Wert von 5 kOhm hat und für die Sender-Empfänger-Paarung mit den Kennlinien C/C' ein Belastungswiderstand 18 mit einem Wert von 10 kOhm gewählt wird.

Des weiteren wird durch die Verwendung angepasster Widerstandswerte für den Belastungswiderstand 18, wie in Fig. 3 bis 5 durch die Pfeile angedeutet, für den Senderstrom der Bereich verkleinert, über den der Senderstrom für unterschiedliche Sender-Empfänger-Paarungen variiert wird, um eine Ausgangsspannung mit einem vorgegebenen Wert zu erreichen (beispielsweise 2 Volt).

**Patentansprüche**

1.   Verfahren zum Einstellen von Ausgangsspannungen eines Trübungssensors für Haushaltsgeräte zur Erfassung der Trübung eines Mediums (26) mittels einer von einem Sender (2) ausgestrahlten und von einem Empfänger (6) empfangenen, sich teilweise durch das Medium (26) ausbreitenden Strahlung (4), mit folgenden Schritten:

-   Definieren einer gewünschten Kennlinie (B', D) oder eines gewünschten Kennlinienbereichs (A', D'; A', D), die die gewünschten Ausgangsspannungen ($U_e$) des Empfängers (6) in Antwort auf von dem Sender (2) erhaltener Strahlung (4) in Abhängigkeit von Senderströmen ($I_s$) zum Betrieb des Senders (2) charakterisiert,

-   Ermitteln einer aktuellen Kennlinie (A, B, C, D), die die tatsächliche Abhängigkeit von Ausgangsspannungen ($U_e$) des Empfängers (6) von den Senderströmen ($I_s$) charakterisiert,

- Vergleichen der aktuellen Kennlinie (A, B, C, D) mit der gewünschten Kennlinie (B', D) oder dem gewünschten Kennlinienbereich (A', D'; A', D), und

- Bestimmen einer ausgangsseitigen ohmschen Belastung für den Empfänger (6), wenn der Vergleich angibt, dass sich die aktuelle und die gewünschte Kennlinie unterscheiden oder die aktuelle Kennlinie (B', D) außerhalb des gewünschten Kennlinienbereichs (A', D'; A', D), derart, dass die gewünschten Ausgangsspannungen (U$_e$) erreicht werden, **gekennzeichnet durch**

- Festlegen eines Belastungswiderstands (18) für den Empfänger (6) auf die bestimmte ausgangsseitige ohmsche Belastung.

2. Verfahren nach Anspruch 1, bei dem als Belastungswiderstand (18) ein in dem Trübungssensor baueinheitlich integrierter Widerstand (20) verwendet wird.

3. Verfahren nach einem der vorherigen Ansprüche, bei dem als Belastungswiderstand (18) Potentiometer oder lasergetrimmte Widerstände verwendet werden.

4. Verfahren nach einem der vorherigen Ansprüche, bei dem

- eine aktuelle Übertragungscharakteristik für die Strahlung (4) zwischen dem Sender (2) und dem Empfänger (6) ermittelt wird, und

- auf der Grundlage der Übertragungscharakteristik ein Widerstandswert bestimmt wird, auf den der Belastungswiderstand (18) des Empfängers (6) festgelegt wird.

5. Trübungssensor für Haushaltsgeräte, insbesondere Waschmaschinen, Spülmaschinen und Trockengeräte, mit:

- einem Sender (2) zum Aussenden einer sich durch ein im Inneren eines Haushaltsgeräts befindlichen Mediums (26) ausbreitenden Strahlung (4),

- einem Empfänger (6) zum Empfangen von von dem Sender (2) erzeugter Strahlung (4), wobei ein durch den Empfänger (6) fließender Empfängerstrom (I$_e$) von der von dem Empfänger (6) empfangenen Strahlungsintensität der Strahlung (4) abhängt, und

- einem mit dem Empfänger (6) ausgangsseitig verbundenen Belastungswiderstand **gekennzeichnet** (18) mit einem Widerstandswert für eine gemäß dem Verfahren nach Anspruch 1 festgelegte ausgangsseitige ohmsche Belastung des Empfängers (6).

6. Trübungssensor nach Anspruch 5, bei dem der Belastungswiderstand (18) baueinheitlich integriert ist.

7. Trübungssensor nach Anspruch 5 oder 6, bei dem der Belastungswiderstand (18) ein Potentiometer oder ein lasergetrimmter Widerstand ist.

**Claims**

1. Method for adjusting output voltages of a turbidity sensor for household appliances for measuring the turbidity of a medium (26) by means of a radiation (4) partially propagating through the medium (26) being emitted from a sender (2) and received by a receiver (6), comprising the following steps:

- defining a desired characteristic line (B', D) or a desired characteristic line range (A', D',; A', D) which characterizes the desired output voltages (Ue) of the receiver (6) in response to a radiation (4) received from the sender (2) in dependence of sender currents (Is) for operation of the sender (2);

- determining a current characteristic line (A, B, C, D) which characterizes the actual dependency of output voltages (Ue) of the receiver (6) from the sender currents (Is);,

- comparing the current characteristic line (A, B, C, D) with the desired characteristic line (B', D) or the desired characteristic line range (A', D'; A', D), and

- determining an ohmic load for the receiver (6) for its output side if the comparison indicates that the current and the desired characteristic lines are different or that the current characteristic line (B', D) is outside the desired characteristic line range (A', D'; A', D) such that the desired output voltages (Ue) are reached;

- setting a load resistance (18) for the receiver (6) to the determined ohmic load at the output side.

2. Method according to claim 1, wherein a resistor (20) integrally formed in the turbidity sensor is used as load resistance (18)

3. Method according to one of the preceding claims, wherein potentiometers or laser trimmed resistances are used as load resistance (18).

4. Method according to one of the preceding claims, wherein

- a current transmission characteristic for the radiation (4) between the sender (2) and the receiver (6) is determined, and

- a resistance value to which the load resistance (18) of the receiver (6) is set is determined on the basis of the transmission characteristic.

5. Turbidity sensor for household appliances, in particular washing machines, dishwashers and dryers, comprising:

    - a sender (2) for emitting a radiation (4) propagating through a medium (26) present in the interior of a household appliance,
    - a receiver (6) for receiving radiation (4) generated by the sender (2),

    wherein a receiver current (Ie) flowing through the receiver (6) depends on the radiation intensity of the radiation (4) received by the receiver (6), and

    - a load resistance (18) connected with the receiver (6) on its output side having a resistance value for an adjusted ohmic load of the receiver (6) for its output side.

6. Turbidity sensor according to claim 5, wherein the load resistance (18) is integrally formed.

7. Turbidity sensor according to claim 5 or 6, wherein the load resistance (18) is a potentiometer or a laser trimmed resistance.

## Revendications

1. Procédé pour régler les tensions de sortie d'un capteur de turbidité utilisé dans un appareil ménager pour détecter la turbidité d'un fluide (26) au moyen d'un rayonnement (4) se propageant au moins en partie dans le fluide (26), émis par un émetteur (2) et reçu par un récepteur (6), comprenant les étapes suivantes :

    - la définition d'une courbe caractéristique souhaitée (B', D) ou d'une plage de courbes caractéristiques souhaitée (A', D'; A', D) **qui caractérise** les tensions de sortie ($U_e$) souhaitées du récepteur (6) en réponse au rayonnement (4) reçu par l'émetteur (2) en fonction des courants émetteurs ($I_s$) utilisés pour le fonctionnement de l'émetteur (2),
    - la détermination d'une courbe caractéristique actuelle (A, B, C, D) qui **caractérise** la dépendance réelle des tensions de sortie ($U_e$) du récepteur (6) vis-à-vis des courants émetteurs ($I_s$),
    - la comparaison entre la courbe caractéristique actuelle (A, B, C, D) et la courbe caractéristique souhaitée (B', D) ou la plage de courbes caractéristiques souhaitée (A', D'; A', D), et

    - la définition d'une charge ohmique en sortie pour le récepteur (6) lorsque la comparaison fait ressortir que la courbe caractéristique actuelle et la courbe caractéristique souhaitée diffèrent ou que la courbe caractéristique actuelle (B', D) est située en dehors de la plage des courbes caractéristiques souhaitée (A', D'; A', D), de manière à atteindre les tensions de sortie ($U_e$) souhaitées,

    **caractérisé par**

    - la définition d'une résistance de charge (18) pour le récepteur (6) en fonction de la charge ohmique en sortie déterminée.

2. Procédé selon la revendication 1, dans le cadre duquel il est utilisé comme résistance de charge (18) une résistance (20) intégrée sous forme de composant dans le capteur de turbidité.

3. Procédé selon l'une des revendications précédentes, dans le cadre duquel il est utilisé comme résistance de charge (18) un potentiomètre ou des résistances ajustées par laser.

4. Procédé selon l'une des revendications précédentes, dans le cadre duquel

    - il est calculé une caractéristique de transmission actuelle pour le rayonnement (4) entre l'émetteur (2) et le récepteur (6), et
    - il est déterminé, sur la base de la caractéristique de transmission, une valeur de résistance en fonction de laquelle sera déterminée la résistance de charge (18) du récepteur (6).

5. Capteur de turbidité pour appareils ménagers, en particulier pour les machines à laver, les lave-vaisselle et les sèche-linge, comprenant :

    - un émetteur (2) pour l'émission d'un rayonnement (4) se propageant dans un fluide (26) se trouvant à l'intérieur d'un appareil ménager,
    - un récepteur (6) pour la réception d'un rayonnement (4) généré par l'émetteur (2), un courant récepteur ($I_e$) traversant le récepteur (6) étant dépendant de l'intensité du rayonnement reçu par le récepteur (6), et
    - une résistance de charge (18) reliée en sortie au récepteur (6) et présentant une valeur de résistance pour une charge ohmique en sortie déterminée du récepteur (6).

6. Capteur de turbidité selon la revendication 5, dans le cadre duquel la résistance de charge (18) est intégrée sous forme de composant.

**7.** Capteur de turbidité selon la revendication 5 ou 6, dans le cadre duquel la résistance de charge (18) est un potentiomètre ou une résistance ajustée par laser.

*8*

*2* → **Sender 2** *10* *4* →→ *6* ← **Empfänger**
(Sendestrom)
↓ *14* (Empfängerstrom) ↓

*12*

*16* ⊘ ---- ⊘

*18* **Belastungswiderstand**

*20*

**Fig.   1**

Fig. 2

Originalkennlinie
Kennlinie mit Belastung 10 KOhm

Strombereich
1,25-5 mA ;
Imin zu Imax Faktor4

Fig.3

(Toleranz-) Bereichverschiebung
Kennlinie mit Belastung 5KOhm

Fig.4

Strombereich
2,5-10 mA ;
Imin zu Imax Faktor4

Toleranzbereicheinengung
Kennlinie mit angepasster Belastung.

Strombereich
2,5-5 mA ;
Imin zu Imax Faktor 2,0

Fig.5